# FASCICULE DE BREVET EUROPEEN

(11) **EP 4 193 113 B1**
(45) Date de publication et mention de la délivrance du brevet: **28.01.2026**
(21) Numéro de dépôt: 21773129.8
(22) Date de dépôt: 02.08.2021
(51) Int. Cl.: F41F 3/08

(54) **LANCEUR DE PROJECTILE**
PROJEKTILABSCHUSSVORRICHTUNG
PROJECTILE LAUNCHER

(30) Priorité: 06.08.2020 FR 2008315
(43) Date de publication de la demande: 14.06.2023
(73) Titulaire: Aresia-Valenton, 94460 Valenton (FR)
(72) Inventeur: GUARALDO, Denis, 94460 Valenton (FR)
(74) Mandataire: Cabinet Netter
(86) Numéro de dépôt international: PCT/FR2021/051435
(87) Numéro de publication internationale: WO 2022/029383

(56) Documents cités:
- RU-C2- 2 343 391

## Description

L'invention concerne le domaine de la surveillance maritime aéroportée pour lequel certaines missions nécessitent de larguer des bouées sonar depuis un aéronef : avion, hélicoptère, drone, etc. Un lanceur peut être disposé en soute ou à l'extérieur de l'aéronef. De telles missions peuvent nécessiter le largage de nombreuses bouées sonar. Aussi, les lanceurs peuvent être regroupés dans des structures.

Pour maitriser l'éjection des bouées, plusieurs concepts de largage sont envisagés:
- par gravité à partir d'un lanceur vertical
- par éjection pyrotechnique à partir d'un lanceur horizontal ou vertical
- par éjection pneumatique à partir d'un lanceur horizontal ou vertical FR 2 479 135 Alkan décrit un lance-bouée à barillet capable de lancer des bouées courtes ou longues par éjection gravitaire. Quatre vérins sont mis en œuvre pour le déclenchement et l'éjection.

FR 2 497 766 Alkan décrit un lance-bouée pneumatique à piston. L'éjection provoque la rupture d'une pièce frangible. RU2343391 divulgue un lance torpille pneumatique.

Les structures à plusieurs lanceurs peuvent être intégrées dans la soute des aéronefs ou à l'extérieur. Dans le cas où les lanceurs sont installés à l'extérieur la structure se présente sous la forme d'un pod. Dans le cas d'une structure en forme de pod, la conception des lanceurs imposent des contraintes de masse et d'encombrement plus exigeantes, tout en exigeant une puissance élevée.

La Demanderesse a aussi connaissance d'un déclencheur électrique apte, lorsque commandé par un courant électrique, à actionner une détente. Le déclencheur électrique est encombrant et lourd. Sa puissance est fixe.

Une telle solution présente l'inconvénient d'utiliser un composant, le vérin électrique, lourd et volumineux. De plus, le vérin électrique est disposé au droit d'un bouchon. Ceci est préjudiciable lorsque l'on souhaite regrouper plusieurs lanceurs côte à côte. De plus, ce composant, est de puissance fixe. En effet, il est souhaité actuellement monter en gamme de puissance de déclenchement. Ceci entraîne une augmentation du volume et du poids du vérin électrique, non souhaitable dans le domaine aéronautique.

L'invention vient améliorer la situation.

Pour cela, l'invention concerne un lanceur de projectile, tel une bouée sonar, comprenant un tube de stockage et de lancement apte à accueillir un projectile, une culasse obturant une extrémité du tube, un propulseur disposé dans le tube entre la culasse et le projectile, comprenant une réserve de gaz sous pression et apte à appliquer au projectile un effort d'éjection, un bouchon obturant l'autre extrémité du tube, présentant une configuration verrouillée dans laquelle le bouchon engage la paroi interne du tube de manière à fermer le tube et à maintenir le projectile dans le tube et une configuration déverrouillée dans laquelle le bouchon est libre relativement au tube et un déclencheur présentant une configuration escamotée, de repos, et une configuration déployée, apte à réaliser un déclenchement, faisant passer le bouchon de la configuration verrouillée à la configuration déverrouillée, où le déclencheur est pneumatique et est alimenté en pression par la réserve.

La puissance pneumatique disponible pour le déclencheur est proportionnelle à la puissance d'éjection, par égalité de pression, la source d'énergie étant la même.

Dans un mode de réalisation, le déclencheur comprend un vérin, une canalisation reliant la réserve au vérin et au moins un distributeur disposé sur la canalisation.

Dans un mode de réalisation, ledit au moins un distributeur comprend au moins deux distributeurs disposés en série. Préférentiellement, les distributeurs sont décalés angulairement.

Dans un mode de réalisation, un distributeur comprend une entrée, une sortie, une configuration fermée où l'entrée et la sortie sont obturées et une configuration ouverte où l'entrée et la sortie sont connectées entre elles. Le distributeur est simple effet : rappelé en configuration fermée par un ressort et commandé en configuration ouverte par une commande, préférentiellement électrique, pouvant être doublée d'une commande manuelle.

Dans un mode de réalisation, ledit au moins un distributeur est disposé à proximité de la réserve, préférentiellement dans le prolongement du tube au-delà de la culasse Dans un mode de réalisation, le vérin est simple effet, rappelé en une configuration escamotée par un ressort et commandé en une configuration déployée, apte à réaliser un déclenchement, par une commande pneumatique, pouvant être doublée d'une commande manuelle

Dans un mode de réalisation, le vérin est disposé à proximité du bouchon.

Dans un mode de réalisation, le vérin comprend une tige, dimensionnée pour, y compris en configuration déployée, rester hors du volume intérieur du tube. Une interférence avec l'éjection du bouchon ou du projectile est évitée.

Dans un mode de réalisation, le déclencheur comprend une fuite calibrée, par exemple de très petite section, afin de permettre un retour du déclencheur en configuration de repos. Le risque de déclenchement intempestif en cas de fuite de distributeur est réduit.

Dans un mode de réalisation, la fuite calibrée est ménagée dans l'étanchéité du vérin.

L'invention sera mieux comprise à la lecture de la description qui suit, faite uniquement à titre d'exemple, et en référence aux figures en annexe dans lesquelles :
[Fig. 1] montre, en vue de profil coupée selon l'axe longitudinal, un lanceur selon un mode de réalisation,
[Fig. 2] montre, en vue de profil coupée selon l'axe longitudinal, un lanceur selon un autre mode de réalisation,
[Fig. 3] montre, en vue de profil coupée selon l'axe longitudinal, un lanceur selon un autre mode de réalisation, avec son déclencheur, prêt à lancer,
[Fig. 4] montre, en vue de profil coupée selon l'axe longitudinal, le lanceur de la figure 3, au début du lancement,
[Fig. 5] montre, en vue de profil coupée selon l'axe longitudinal, le lanceur de la figure 3, en cours de lancement,
[Fig. 6] montre, en vue de profil coupée selon l'axe longitudinal, le lanceur de la figure 3, en fin de lancement.

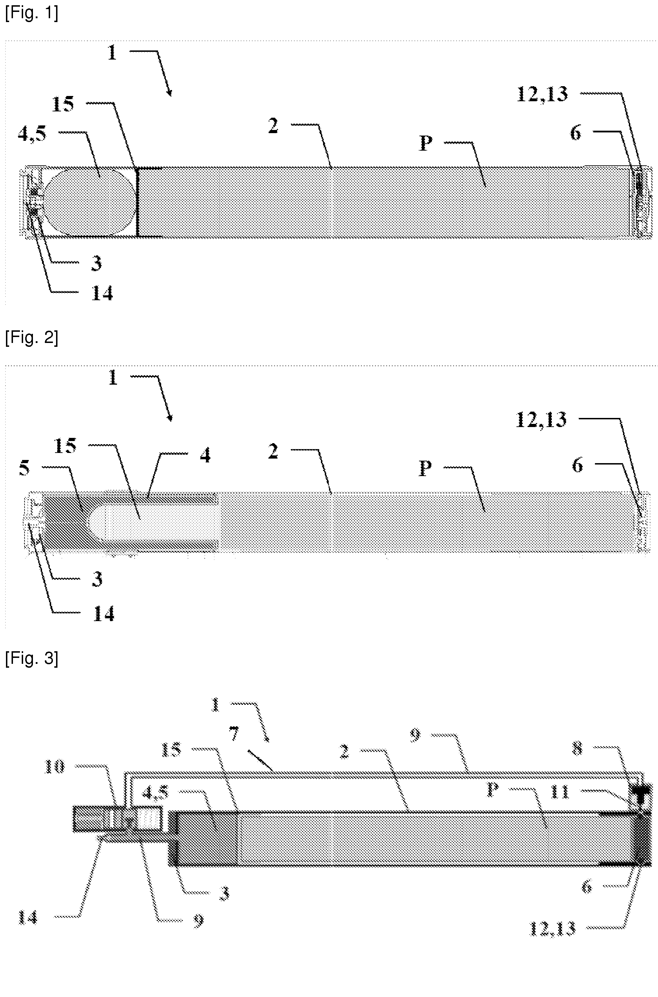

En référence aux figures 1 et 2, pour réaliser un lanceur 1 de projectile, tel une bouée sonar, un tube 2 de stockage et de lancement est utilisé. Le tube 2 est fermé à une extrémité par une culasse 3 fixée au tube 2 et à l'autre extrémité par un bouchon 6 amovible. Entre les deux extrémités, le tube 2 peut accueillir un projectile P, de section sensiblement identique à la section du tube 2 avec un jeu assurant un glissement libre du projectile P relativement au tube 2. Le projectile P peut être une bouée de forme cylindrique, notamment avec un standard à 130 mm de diamètre et de longueur 914mm.

Un système d'éjection pneumatique ou lanceur de projectile maintient la pression dans le volume fermé pendant toutes les phases de transport et, au moment souhaité, libère et transmet l'énergie à une charge. Ces opérations doivent être réalisées avec un niveau de fiabilité répondant aux exigences de sécurité aéronautique. Les systèmes d'éjection pneumatique sont suffisamment robustes pour prendre en compte les environnements rencontrés dans toutes les phases d'utilisation : stockage, roulage, vol, atterrissage sévère, etc.

Pour le regroupement des lanceurs dans un pod, la Demanderesse a développé un lanceur bouée capable de fonctionner à l'horizontal. Augmenter la pression pneumatique pour compenser la perte de l'effet accélérateur de la gravité dans le cas de l'éjection verticale implique de revoir le déclencheur car l'augmentation de la pression pneumatique augmente l'effort nécessaire au déverrouillage du jonc rétractable.

Le lanceur 1 comprend encore un propulseur 4 disposé dans le tube 2 entre la culasse 3 et le projectile P. Le propulseur 4 est apte à appliquer au projectile P un effort d'éjection, principalement axial selon l'axe du tube 2. Le propulseur 4 est pneumatique et comprend une réserve 5 de gaz sous pression pour produire l'effort d'éjection.

La figure 1 illustre un propulseur 4 selon un premier mode de réalisation, comprenant une réserve 5 de gaz sous forme d'une vessie souple et déformable apte à accueillir un gaz, typiquement de l'air, sous pression. L'armement du propulseur 4 se fait par une mise en pression de la vessie, via une valve 14. Ceci crée un effort, canalisé principalement longitudinalement, soit selon l'axe du tube 2, qui tend à pousser le projectile P contre le bouchon 6. La vessie en se déployant pousse directement le projectile P. Un séparateur/poussoir 15 peut être intercalé entre le propulseur 4 et le projectile P.

La figure 2 illustre un propulseur 4 selon un deuxième mode de réalisation, comprenant une réserve 5 de gaz et un poussoir 15 rigide. Au moins la partie de la réserve 5 en contact avec le poussoir 15 est souple et déformable. L'armement du propulseur 4 se fait par une mise en pression de la réserve 5, via une valve 14. Ceci crée un effort, canalisé principalement longitudinalement, soit selon l'axe du tube 2, qui tend à pousser le projectile P contre le bouchon 6. La réserve 5, en se déployant, se déroule et pousse le poussoir 15 qui à son tour pousse le projectile P.

Le bouchon 6 présente une configuration verrouillée dans laquelle le bouchon 6 engage la paroi interne du tube 2. Ainsi, le bouchon 6 est solidement solidarisé avec le tube 2. Le bouchon 6 ferme ainsi le tube 2 et maintient le projectile P en place dans le tube 2, y compris lorsque le propulseur 4 est armé et applique un effort d'éjection. Le bouchon 6 présente encore une configuration déverrouillée dans laquelle le bouchon 6 est libre relativement au tube 2, et peut ainsi être retiré et séparé du tube 1.

Le lanceur 1 comprend encore un déclencheur 7. Le déclencheur 7 présente une configuration escamotée, de repos, dans laquelle le déclencheur 7 est par défaut et la plupart du temps. Le déclencheur 7 présente encore une configuration déployée. Dans la configuration déployée, le déclencheur 7 est apte à actionner le bouchon 6, et à réaliser un déclenchement, faisant passer le bouchon 6 de la configuration verrouillée à la configuration déverrouillée.

Aussi, une séquence d'utilisation d'un tel lanceur 1 comprend typiquement les étapes suivantes. Alors que le propulseur 4 est désarmé, un projectile P est introduit dans le tube 2. Le projectile P est immobilisé à l'intérieur par la mise en place du bouchon 6 à l'extrémité du tube 2. Le bouchon 6 est solidarisé avec le tube 2 par une mise en configuration verrouillée. Le propulseur 4 peut alors être armé, typiquement en augmentant la pression dans la réserve 5 de gaz, notamment par compression/gonflage au moyen de la valve 14. L'engagement du bouchon 6 avec le tube 2 est réalisé selon une direction radiale et s'oppose ainsi efficacement à l'effort, sensiblement axial qu'exerce le propulseur 4 sur le projectile P et que le projectile P répercute sur le bouchon 6. Le lanceur 1, ainsi chargé et armé est apte à être transporté, chargé sur aéronef, et reste chargé et armé jusqu'à une éjection du projectile P. Lorsque l'on souhaite éjecter le projectile P, une commande est transmise au déclencheur 7. Le déclencheur 7 réalise alors un déclenchement et passe de la configuration repliée à la configuration dépliée. Ce faisant le déclencheur 7 actionne le bouchon 6 qui passe de la configuration verrouillée à la configuration déverrouillée. Le bouchon 6 est alors libéré et peut se désolidariser du tube 2. Le propulseur 4, armé, continue d'exercer un effort d'éjection. Aussi, le propulseur 4 pousse sur le projectile P. Le projectile P lui-même pousse sur le bouchon 6. Le projectile P sous l'effet de l'effort d'éjection, est éjecté hors du tube 2, poussant devant lui le bouchon 6.

Le fonctionnement du bouchon 6 va maintenant être décrit. Un mécanisme de verrouillage, solidaire d'un bouchon 6, peut passer d'une configuration verrouillée, à une configuration déverrouillée.

Le mécanisme de verrouillage comprend un jonc 12, par exemple circulaire. Le jonc 12 présente une section complémentaire de la section d'une gorge 13 creusée dans la paroi interne du tube 2. Le jonc 12 est élastique. Le jonc 12 présente au repos un diamètre extérieur strictement inférieur au diamètre intérieur du tube 2. Aussi, au repos, le jonc 12 reste hors de la gorge 13 et l'ensemble jonc 12 / mécanisme de verrouillage / bouchon 6 est dans une configuration déverrouillée. Le bouchon 6 peut alors librement se déplacer relativement au tube 2, pour en être extrait ou au contraire pour y être introduit.

Le mécanisme de verrouillage comprend encore un dispositif à genouillère. Le dispositif à genouillère présente deux configurations stables : une configuration désarmée et une configuration armée. Le dispositif à genouillère comprend deux points d'articulation. Un ressort améliore la stabilité des deux configurations. Lorsqu'il est armé, le dispositif à genouillère, écarte les deux points d'articulation avec le jonc 12, s'oppose à l'élasticité du jonc 12 et augmente le diamètre du jonc 12. Aussi, le jonc 12 présente, ainsi contraint un diamètre extérieur supérieur au diamètre intérieur du tube 2 et inférieur au diamètre de fond de gorge 13. Aussi, le jonc 12 engage la gorge 13 et l'ensemble jonc 12 / mécanisme de verrouillage / bouchon 6 est dans une configuration verrouillée. Si le bouchon 6 est en place dans le tube 2 en regard de la gorge 13, le jonc 12 engage la gorge 13 et le bouchon 6 est interdit de déplacement axialement relativement au tube 2.

Le mécanisme de verrouillage comprend encore une détente, proéminente lorsque le dispositif à genouillère est armé. Un appui sur la détente provoque un déclenchement du dispositif à genouillère qui passe en configuration désarmée. Le jonc 12, libéré de sa contrainte, aide de par son élasticité au déclenchement et revient à la configuration de repos et à un diamètre nominal plus réduit. Ceci s'accompagne d'un escamotage de la détente à l'intérieur du diamètre du jonc 12. Le bouchon 6 est déverrouillé et peut être éjecté avec le projectile P. Le bouchon 6 est perdable.

Pour réaliser une nouvelle éjection, le propulseur 4 est désarmé, replacé dans son volume initial. La séquence précédente peut être reproduite, débutant avec l'introduction d'un nouveau projectile P dans le tube 2.

Pour déclencher une éjection d'un projectile P, on actionne la détente au moyen d'un déclencheur.

Le lanceur 1 illustré à la figure 3 est en configuration armée, prêt à lancer. Le tube 2 est fermé à une extrémité par une culasse 3. Le projectile P est en place dans le tube 2. Le bouchon 6 est en place à l'autre extrémité. Le bouchon 6 est en configuration verrouillée, le jonc 12 engageant la gorge 13 du tube 2, empêchant une sortie du projectile P. Le propulseur 4 est disposé entre la culasse 3 et le projectile P. Le propulseur 4 est armé par mise sous pression de sa réserve 5 de gaz.

Le lanceur 1 comprend encore un déclencheur 7. Le déclencheur 7 est dans une configuration escamotée ou de repos. Le déclencheur 7 présente une autre configuration déployée dans laquelle le déclencheur 7 réalise un déclenchement faisant passer le bouchon 6 de la configuration verrouillée à la configuration déverrouillée, initiant une phase de lancement au cours de laquelle le projectile P est éjecté.

Le déclencheur 7 selon l'invention est pneumatique. Le déclencheur 7 est alimenté en énergie par la pression issue de la réserve 5 de gaz du propulseur 4.

Ceci est particulièrement avantageux en ce que le principe est évolutif en taille. Une augmentation de la puissance de lancement nécessite un bouchon 6 présentant une force de verrouillage augmentée. Aussi, l'effort de déclenchement est augmenté en proportion et avec lui la puissance du déclencheur 7 augmente en proportion. Or la puissance du déclencheur est avantageusement fournie par la réserve 5 dont la puissance aussi est augmentée en proportion avec la puissance de lancement.

Selon une caractéristique, le déclencheur 7 comprend un vérin 8, une canalisation 9 reliant la réserve 5 au vérin 8 et au moins un distributeur 10 disposé sur la canalisation 9. Ainsi, tel qu'illustré à la figure 3, lanceur prêt au lancement, le distributeur 10 est fermé. Une première portion de la canalisation 9, reliant la réserve 5 au distributeur 10, est connectée à la réserve 5 chargée, et est sous pression, tel que représenté par un grisage. Au contraire, une deuxième portion de la canalisation 9, reliant le distributeur 10 au vérin 8, est à la pression atmosphérique, tel que représenté par une couleur blanche.

S'agissant d'un lanceur 1 utilisable sur un aéronef, une sûreté de fonctionnement élevée est souhaitable. Aussi, ledit au moins un distributeur 10 peut avantageusement être redondé en étant dédoublé ou plus, afin de comprendre au moins deux distributeurs 10 disposés en série. Ceci permet de se prémunir d'une défaillance d'un distributeur 10 du type ouverture indésirée. Dans ce cas une commande sensiblement simultanée est appliquée à tous les distributeurs 10 lors d'un déclenchement de lancement.

Selon une autre caractéristique, un distributeur 10 comprend, tel qu'illustré symboliquement, une entrée, connectée à la réserve 5, et une sortie, connectée au vérin 8. Le tiroir du distributeur 10 peut occuper deux configurations : d'une part, une configuration fermée, telle qu'illustrée à la figure 3, où l'entrée et la sortie sont obturées et d'autre part, une configuration ouverte, telle qu'illustrée à la figure 4, où l'entrée et la sortie sont connectées entre elles. Dans la configuration ouverte, la première portion de la canalisation 9, reliant la réserve 5 au distributeur 10, est encore sous pression. Ladite pression se transmet alors à la deuxième portion de la canalisation 9, reliant le distributeur 10 au vérin 8, tel que représenté par le grisage. Ladite pression est alors transmise au vérin 8.

Le distributeur 10 est avantageusement simple effet. Ainsi, le distributeur 10 est rappelé en configuration fermée par un ressort et commandé en configuration ouverte par une commande, préférentiellement électrique. Ladite commande est une commande de déclenchement qui initie un lancement. La commande électrique est ici avantageusement doublée d'une commande manuelle, par manœuvre directe du tiroir. Une telle commande manuelle est avantageusement utilisée en test ou pour réaliser un déclenchement en mode dégradé.

Contrairement à la technologie électrique, où la totalité du déclencheur est disposée à proximité du bouchon 6 pour procéder à un déclenchement, la technologie pneumatique permet de déporter le distributeur 10 à proximité de la réserve 5. Il est ainsi possible de déporter une partie importante du volume du déclencheur 7 dans le prolongement du tube 2 au-delà de la culasse 3. Une telle réduction conséquente du volume du lanceur 1 hors du volume du tube 2 et de son prolongement est particulièrement avantageuse pour intégrer des lanceurs 1 parallèles entre eux, en batterie.

Alternativement, une intégration dans le tube 2 est aussi possible.

Selon une autre caractéristique, le vérin 8 est avantageusement simple effet. Le vérin 8 est rappelé en une configuration escamotée par un ressort et commandé en une configuration déployée, apte à réaliser un déclenchement, par une commande pneumatique, ici issue de la canalisation 9. La commande pneumatique peut, ici encore, être doublée d'une commande manuelle. Ainsi, au repos, en l'absence de pression dans la deuxième portion de la canalisation 9, voir figure 3, le ressort rappelle le piston et la tige 11, qui reste ainsi éloignée du bouchon 6 et de sa détente.

Au contraire, lorsqu'un lancement est souhaité, voir figure 4, une pression est présente en entrée du vérin 8. La pression, s'opposant à l'effort de rappel du ressort, pousse sur le piston qui déploie la tige 11. La tige 11 déployée vient actionner la détente du bouchon 6. Le bouchon 6 est alors déverrouillé.

Selon une autre caractéristique, afin de pouvoir actionner la détente du bouchon 6, le vérin 8 est disposé à proximité du bouchon 6. Avantageusement relativement à une technologie électrique, l'encombrement du vérin 8 dans une direction radiale autour du tube 2, peut être très réduit. Le vérin 8 est principalement dimensionné par la course du piston et de la tige. La course de la tige, conditionnée par la course du dispositif à genouillère, peut être limitée. Une augmentation de la force d'appui du vérin 8 s'obtient en augmentant la surface du piston, soit une augmentation de volume longitudinale et non radiale.

Selon une autre caractéristique, la tige 11 du vérin 8 est dimensionnée pour, y compris en configuration déployée, dans laquelle son extrémité est au plus près de l'axe du tube 2, rester hors du volume intérieur du tube 2. Ainsi la tige 11 déployée présente un risque extrêmement faible d'interférer avec l'éjection du bouchon 6 ou du projectile P. Ceci est rendu possible par une extension radiale de la détente.

Tel qu'illustré à la figure 4, le déclenchement est commandé. Le distributeur 10 passe en configuration ouverte, entraînant une transmission de pression au vérin 8. Le vérin 8 se déploie et sa tige actionne la détente du bouchon 6. Le bouchon 6 passe alors en configuration déverrouillée.

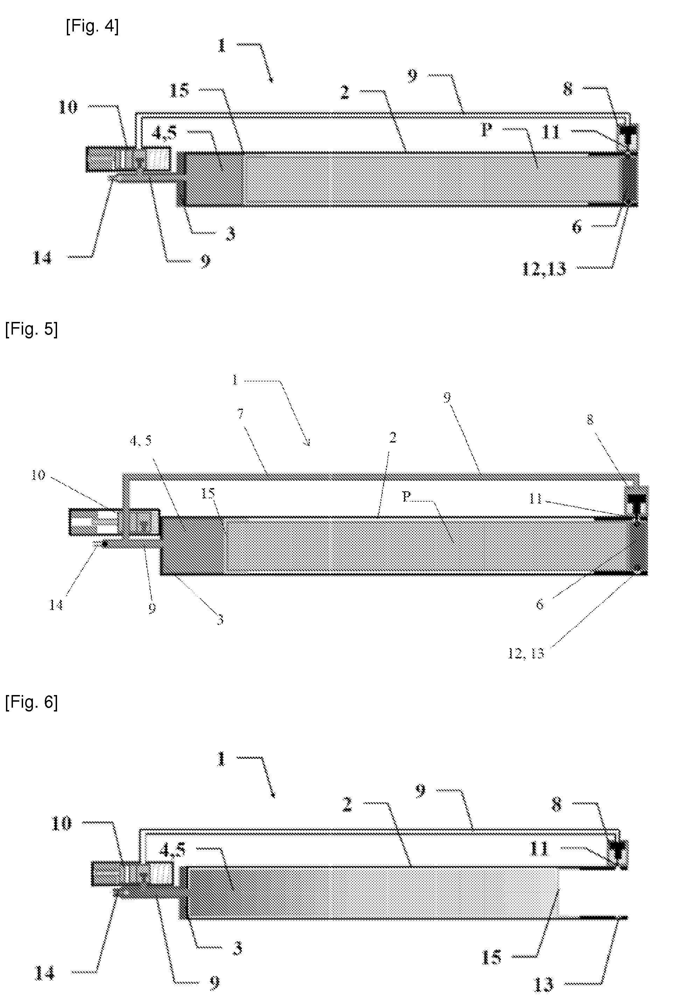

Tel qu'illustré à la figure 5, le propulseur 4 sous pression pousse sur le projectile P. Le projectile P débute son éjection, en expulsant le bouchon 6. Le distributeur 10, non commandé, revient à sa configuration de repos, soit fermé.

Après éjection du projectile P, afin de pouvoir atteindre l'état de fin de lancement, illustrée à la figure 6, il est souhaitable de dépressuriser la deuxième partie de la canalisation 9, afin de ramener le vérin 8 en configuration escamotée. Pour cela, selon une autre caractéristique, le déclencheur 7 comprend une fuite calibrée de très petite section. La section de la fuite est avantageusement telle qu'elle permette un retour à la pression atmosphérique en quelques minutes. Ainsi la fuite est indépendante du déclenchement. Le délai de retour à la pression atmosphérique est compatible avec un éventuel rechargement du lanceur 1. La fuite peut être en tout point du déclencheur 7 situé à l'aval d'une soupape du distributeur 10 : canalisation 9 (deuxième portion), partie aval du distributeur 10, vérin 8.

La fuite calibrée a aussi pour fonction de d'empêcher un déclenchement intempestif en cas de fuite lente d'un distributeur. Un tel cas peut se produire par exemple par perte d'étanchéité du distributeur ou par de micro ouvertures pouvant être provoquées par les vibrations.

Dans un mode de réalisation, deux distributeurs en série sont montés. Pour diminuer encore le risque de micro ouverture provoquée par les vibrations, les deux distributeurs en série peuvent être décalés angulairement, par exemple disposés à 90°.

Selon une autre caractéristique particulièrement avantageuse, la fuite est réalisée en organisant une fuite au niveau l'étanchéité du vérin 8, à l'interface entre le corps et la tige 11. Ceci permet un retour du déclencheur 7 en configuration de repos.

Depuis l'état de la figure 6, un rechargement s'effectue en dépressurisant le propulseur 4, via la valve 14, afin de le ramener en configuration repliée. Un nouveau projectile P peut être mis en place dans le tube 2, puis un nouveau bouchon 6 que l'on verrouille en place. Le propulseur 4 est ensuite chargé par mise en pression de sa réserve 5 et l'on retrouve un état semblable à l'état de la figure 3.

Ainsi, le système d'éjection de bouée à déclencheur pneumatique comprend un tube d'éjection, un volume sous pression, une vanne d'alimentation, un distributeur simple effet piloté électriquement par un solénoïde, une culasse équipée d'un circuit pneumatique en Y permettant de relier la vanne d'alimentation, le distributeur et le volume sous pression, un piston pneumatique simple effet, une canalisation pneumatique reliant le piston au distributeur, un bouchon perdable équipé d'un jonc rétractable sous l'action du piston pneumatique simple effet et un poussoir faisant interface entre la bouée à éjecter et le volume sous pression. Le volume sous pression alimentant à la fois le déclenchement et l'éjection permet un effort de déclenchement proportionnel à la pression et donc à la puissance d'éjection.

L'invention a été illustrée et décrite en détail dans les dessins et la description précédente. Celle-ci est illustrative et donnée à titre d'exemple et non comme limitant l'invention à la seule description. De nombreuses variantes de réalisation sont possibles.

### Liste des signes de référence

P : projectile,
1 : lanceur,
2 : tube,
3 : culasse,
4 : propulseur,
5 : réserve,
6 : bouchon,
7 : déclencheur,
8 : vérin,
9 : canalisation,
10 : distributeur,
11 : tige,
12 : jonc,
13 : gorge,
14 : valve,
15 : poussoir,.

## Revendications

1. Lanceur (1) de projectile, tel une bouée sonar, comprenant un tube (2) de stockage et de lancement apte à accueillir un projectile (P), une culasse (3) obturant une extrémité du tube (2), un propulseur (4) disposé dans le tube (2) entre la culasse (3) et le projectile (P), comprenant une réserve (5) de gaz sous pression et apte à appliquer au projectile un effort d'éjection, un bouchon (6) obturant l'autre extrémité du tube (2), présentant une configuration verrouillée dans laquelle le bouchon (6) engage la paroi interne du tube (2) de manière à fermer le tube (2) et à maintenir le projectile (P) dans le tube (2) et une configuration déverrouillée dans laquelle le bouchon (6) est libre relativement au tube (2), et un déclencheur (7) présentant une configuration escamotée, de repos, et une configuration déployée, apte à réaliser un déclenchement, faisant passer le bouchon (6) de la configuration verrouillée à la configuration déverrouillée, dans lequel le déclencheur (7) est pneumatique et est alimenté en pression par la réserve (5).

2. Lanceur (1) selon la revendication 1, dans lequel le déclencheur (7) comprend un vérin (8), une canalisation (9) reliant la réserve (5) au vérin (8) et au moins un distributeur (10) disposé sur la canalisation (9).

3. Lanceur (1) selon la revendication 2, dans lequel ledit au moins un distributeur (10) comprend au moins deux distributeurs (10) disposés en série, préférentiellement décalés angulairement.

4. Lanceur (1) selon la revendication 2 ou 3, dans lequel un distributeur (10) comprend une entrée, une sortie, une configuration fermée où l'entrée et la sortie sont obturées et une configuration ouverte où l'entrée et la sortie sont connectées entre elles, est simple effet : rappelé en configuration fermée par un ressort et commandé en configuration ouverte par une commande, préférentiellement électrique, pouvant être doublée d'une commande manuelle.

5. Lanceur (1) selon l'une des trois revendications précédentes, dans lequel ledit au moins un distributeur (10) est disposé à proximité de la réserve (5), préférentiellement dans le prolongement du tube (2) au-delà de la culasse (3).

6. Lanceur (1) selon l'une des quatre revendications précédentes, dans lequel le vérin (8) est simple effet, rappelé en une configuration escamotée par un ressort et commandé en une configuration déployée, apte à réaliser un déclenchement, par une commande pneumatique, pouvant être doublée d'une commande manuelle.

7. Lanceur (1) selon l'une des cinq revendications précédentes, dans lequel le vérin (8) est disposé à proximité du bouchon (6).

8. Lanceur (1) selon l'une des six revendications précédentes, dans lequel le vérin (8) comprend une tige (11), dimensionnée pour, y compris en configuration déployée, rester hors du volume intérieur du tube (2).

9. Lanceur (1) selon l'une des sept revendications précédentes, dans lequel le déclencheur (7) comprend une fuite calibrée, afin de permettre un retour du déclencheur (7) en configuration de repos et réduire le risque de déclenchement intempestif en cas de fuite de distributeur.

10. Lanceur (1) selon la revendication 9, dans lequel la fuite calibrée est ménagée dans l'étanchéité du vérin (8).

## Patentansprüche

1. Projektil-Abschussvorrichtung (1), wie eine Sonarboje, umfassend ein Lager- und Abschussrohr (2), das dazu geeignet ist, ein Projektil (P) aufzunehmen, wobei ein Verschluss (3) ein Ende des Rohrs (2) verschließt, ein Triebwerk (4), das im Rohr (2) zwischen dem Verschluss (3) und dem Projektil (P) angeordnet ist, einen Druckgasbehälter (5) umfasst und dazu geeignet ist, eine Ausstoßkraft auf das Projektil auszuüben, wobei ein Stopfen (6) das andere Ende des Rohrs (2) verschließt und eine verriegelte Konfiguration, in der der Stopfen (6) derart in die Innenwand des Rohrs (2) eingreift, um das Rohr (2) zu verschließen und das Projektil (P) in dem Rohr (2) zu halten, und eine entriegelte Konfiguration besitzt, in der der Stopfen (6) relativ zum Rohr (2) frei ist, und einen Auslöser (7), der eine versenkte Ruhekonfiguration und eine ausgefahrene Konfiguration besitzt, die dazu geeignet ist, eine Auslösung durchzuführen, bei der der Stopfen (6) von der verriegelten Konfiguration in die entriegelte Konfiguration wechselt, wobei der Auslöser (7) pneumatisch ist und von dem Behälter (5) mit Druck versorgt wird.

2. Abschussvorrichtung (1) nach Anspruch 1, wobei der Auslöser (7) einen Zylinder (8), eine Leitung (9), die den Behälter (5) mit dem Zylinder (8) verbindet, und mindestens einen an der Leitung (9) angeordneten Verteiler (10) umfasst.

3. Abschussvorrichtung (1) nach Anspruch 2, wobei der mindestens eine Verteiler (10) mindestens zwei in Reihe angeordnete, vorzugsweise winkelversetzte Verteiler (10) umfasst.

4. Abschussvorrichtung (1) nach Anspruch 2 oder 3, wobei ein Verteiler (10) einen Eingang, einen Ausgang, eine geschlossene Konfiguration, in der der Eingang und der Ausgang verschlossen sind, und eine offene Konfiguration, in der der Eingang und der Ausgang miteinander verbunden sind, umfasst und einfachwirkend ist: durch eine Feder in die geschlossene Konfiguration zurückgestellt wird und in der offenen Konfiguration durch eine, vorzugsweise elektrische, Steuerung gesteuert wird, die durch eine manuelle Steuerung ergänzt werden kann.

5. Abschussvorrichtung (1) nach einem der drei vorhergehenden Ansprüche, wobei der mindestens eine Verteiler (10) in der Nähe des Behälters (5), vorzugsweise in der Verlängerung des Rohrs (2) über den Verschluss (3) hinaus angeordnet ist.

6. Abschussvorrichtung (1) nach einem der vier vorhergehenden Ansprüche, wobei der Zylinder (8) einfachwirkend ist, durch eine Feder in eine versenkte Konfiguration zurückgestellt wird und in einer ausgefahrenen Konfiguration, die dazu geeignet ist, eine Auslösung durchzuführen, durch eine pneumatische Steuerung gesteuert wird, die durch eine manuelle Steuerung ergänzt werden kann.

7. Abschussvorrichtung (1) nach einem der fünf vorhergehenden Ansprüche, wobei der Zylinder (8) in der Nähe des Stopfens (6) angeordnet ist.

8. Abschussvorrichtung (1) nach einem der sechs vorhergehenden Ansprüche, wobei der Zylinder (8) eine Stange (11) umfasst, die so dimensioniert ist, dass sie auch in ausgefahrener Konfiguration außerhalb des Innenvolumens des Rohrs (2) bleibt.

9. Abschussvorrichtung (1) nach einem der sieben vorhergehenden Ansprüche, wobei der Auslöser (7) ein kalibriertes Leck umfasst, um eine Rückkehr des Auslösers (7) in die Ruhekonfiguration zu ermöglichen und das Risiko einer unbeabsichtigten Auslösung im Falle einer Leckage des Verteilers zu verringern.

10. Abschussvorrichtung (1) nach Anspruch 9, wobei das kalibrierte Leck in der Dichtung des Zylinders (8) vorgesehen ist.

## Claims

1. A projectile launcher (1), such as a sonar buoy, comprising a storage and launch tube (2) capable of accommodating a projectile (P), a breech (3) sealing one end of the tube (2), a thruster (4) located in the tube (2) between the breech (3) and the projectile (P), comprising a reservoir (5) of pressurised gas and capable of applying an ejection force to the projectile, a cap (6) sealing the other end of the tube (2), having a locked configuration in which the cap (6) engages the inner wall of the tube (2) so as to close the tube (2) and maintain the projectile (P) in the tube (2), and an unlocked configuration in which the cap (6) is free relative to the tube (2), and a trigger (7) having a retracted, rest, configuration and an extended configuration, capable of triggering, transitioning the cap (6) from the locked configuration to the unlocked configuration, wherein the trigger (7) is pneumatic and is supplied with pressure by the reservoir (5).

2. The launcher (1) according to claim 1, wherein the trigger (7) comprises a cylinder (8), a conduit (9) connecting the reservoir (5) to the cylinder (8), and at least one distributor (10) disposed on the conduit (9).

3. The launcher (1) according to claim 2, wherein said at least one distributor (10) comprises at least two distributors (10) disposed in series, preferably angularly offset.

4. The launcher (1) according to claim 2 or 3, wherein a distributor (10) comprises an inlet, an outlet, a closed configuration in which the inlet and outlet are sealed, and an open configuration in which the inlet and outlet are interconnected, is single-acting: it is returned to the closed configuration by a spring and is controlled in the open configuration by a control, preferably electrical control, which may be supplemented by a manual control.

5. The launcher (1) according to one of the three preceding claims, wherein said at least one distributor (10) is disposed in proximity to the reservoir (5), preferably as an extension of the tube (2) beyond the breech (3).

6. The launcher (1) according to one of the four preceding claims, wherein the cylinder (8) is single-acting, returned in a retracted configuration by a spring and controlled in an extended configuration, capable of triggering by pneumatic control, which may be supplemented by manual control.

7. The launcher (1) according to one of the five preceding claims, wherein the cylinder (8) is located in proximity to the cap (6).

8. The launcher (1) according to one of the six preceding claims, wherein the cylinder (8) comprises a rod (11) that is dimensioned to remain outside the internal volume of the tube (2), even when in the extended configuration.

9. The launcher (1) according to one of the seven preceding claims, wherein the trigger (7) includes a leak master to allow the trigger (7) to return to the rest configuration and to reduce the risk of inopportune triggering in the event of a distributor leak.

10. The launcher (1) according to claim 9, wherein the leak master is provided in the seal of the cylinder (8).
